# FASCICULE DE BREVET EUROPEEN

(11) **EP 1 410 393 B1**
(45) Date de publication et mention de la délivrance du brevet: **27.02.2008**
(21) Numéro de dépôt: 02740810.3
(22) Date de dépôt: 27.05.2002
(51) Int. Cl.: G11B 33/04

(54) **ETUIS A UN ET A PLUSIEURS DISQUES LASER ET LEURS MOYENS DE CLASSEMENT**
TASCHE FÜR EIN ODER MEHRERE LASERPLATTEN UND MITTELN ZUR AUFBEWAHRUNG
CASES FOR ONE OR SEVERAL LASER DISCS AND MEANS FOR CLASSIFYING SAME

(30) Priorité: 29.05.2001 FR 0106963
(43) Date de publication de la demande: 21.04.2004
(73) Titulaire: Bruet-Ferreol, Jean-Denis, 75006 Paris (FR)
(72) Inventeur: Bruet-Ferreol, Jean-Denis, 75006 Paris (FR)
(74) Mandataire: Dejoux, André
(86) Numéro de dépôt international: PCT/FR2002/001763
(87) Numéro de publication internationale: WO 2002/097819

(56) Documents cités:
- EP-A- 0 866 463
- DE-A- 19 810 966
- DE-U- 29 605 096
- US-A- 5 533 614
- US-A- 5 685 425
- US-A- 5 823 334
- US-A- 5 855 273
- US-A- 5 944 181
- US-A- 6 041 946
- US-A- 6 164 445

## Description

L'invention concerne des supports à un ou plusieurs disques laser "Compact Disc, CD Audio, CDR, CDWR, CD ROM, DVD") et leurs moyens de classement, dénommés ci-après CD.

On connaît déjà des boîtiers à CD et similaires réalisés en matière plastique rigide genre polycarbonate pour recevoir de un à trois CD. Ces boîtiers à CD audio, CD ROM et DVD gravés sont constitués d'une boîte à couvercle articulé et pour certains, plus épais, d'une pièce rapportée encastrée dans la boîte et seulement d'une boîte et d'un couvercle pour les moins épais, environ 3mm, destinés à recevoir et centrer le CD. Les documents US-A-5 855 273, US-A-5 685 425, EP-A-0 866 463, US-A-5 944 181, US-A-5 533 614, US -A-5.551.560,

EP-A-0.671.743 décrivent un support de disque comprenant un ou plusieurs centreurs pour garder un ou plusieurs disques laser ; les centreurs sont moulés en une seul pièce sur uniquement une paroi rigide comportant un épaulement périphérique. Ces supports sont généralement disposés dans un boîtier à couvercle articulé. Les documents US -A-5.551.560, EP-A-0.671.743 comportent un centrage par la périphérie, au moyen de nervures 28, 29 faisant office de centrage périphérique à l'intérieur d'un boîtier et d'un centrage continu 13a d'un CD 13 par un support 14a dans un boîtier 11.

**Ils présentent les inconvénients suivants:**
◆ fragilité de la charnière, fragilité des dents de centrage du CD, fragilité des faces du boîtier; ces divers éléments se cassant facilement en cours de manipulation;
◆ complexité des trois pièces constitutives à fabriquer et assembler pour les versions les plus épaisses;
◆ encombrement important du boîtier en épaisseur 10 mm pour les plus courants à 3mm pour les moins épais, par rapport à l'épaisseur du CD soit 1mm, ce qui abouti à des largeurs importantes de classement vertical et exclut tout autre type de classement;
◆ poids important du boîtier par rapport à celui du CD à protéger;
◆ complexité et difficultés de manipulations, à cause du couvercle clipé qui les rend peu pratiques ni rapides pour accéder au CD, et le sont encore plus dans le cas de doubles CD.
◆ les classeurs actuels sont onéreux et peu pratiques; il faut introduire les CD dans des pochettes non fermées d'où ils peuvent glisser pendant la manoeuvre des pages, leur accessibilité est médiocre et la face gravée frotte sur la paroi correspondante de la pochette;
◆ la fermeture éclair de ces classeurs est peu maniable après son ouverture car elle doit libérer l'angle permettant la manipulation des pages;
◆ les boîtiers sont onéreux et peu maniables et encombrants; il est difficile de les empiler verticalement.

**Les problèmes à résoudre pour pallier ces divers inconvénients** sont les suivants:
- simplifier les manipulations d'accès au CD simple ou double et celles de remise en place dans leur boîtier, avec une seule main;
- protéger suffisamment la face gravée du CD ou de doubles CD; .accroître la résistance mécanique du boîtier;
- réduire l'encombrement du boîtier en épaisseur pour ranger beaucoup plus de CD dans le même volume que celui des boîtiers existants;
   ◆ réduire l'encombrement en épaisseur des boîtiers à double CD ou DVD tout en facilitant l'accés à ceux-ci et leur rangement après utilisation;
   ◆ alléger l'étui pour pouvoir réduire le coût d'envoi pa! la poste;
   ◆ pouvoir stocker et classer les CD en quantité dans un moyen de rangement peu encombrant, facile à manipuler et à transporter;
   ◆ réduire le coût de fabrication;
   ◆ pouvoir les ranger en quantité dans des boîtes et des classeurs à feuilles séparées sans exercer de frottement sur la feuille support et sans risque de glissement hors du classeur en cours de manipulations tout en restant très facilement accessible.

Les supports de disques laser selon l'invention, résolvent l'ensemble des problèmes posés. Il été retenu que, dans le problème posé, seule la face gravée des CD était à protéger l'autre face n'en ayant pas besoin.

Une première version la plus simple de support selon l'invention, pour recevoir un seul CD, se réduit à une paroi mince munie d'un centreur sur lequel est clippé le CD par son trou central, la face du CD à protéger étant placée en regard de la paroi correspondante du support.

Dans une seconde version pour permettre à la fois d'empiler les supports ou de les ranger verticalement sur des rayonnages ou dans les boîtes, on a prévu un épaulement extérieur périphérique à la paroi de l'étui dont la face interne conique ou munie de picots, permet de retenir une étiquette en carton engagée élastiquement dans le cône qui la retient, la face gravée 20 du CD étant en appui sur l'étiquette lue par transparence au travers de la paroi du support, l'autre face, portant des informations, restant lisible directement du fait de l'absence de couvercle. Pour alléger le support, la forme extérieure de l'épaulement est octogonale, ce qui permet son appui vertical stable. Le support est réalisé dans une matière plastique transparente semi-rigide, pouvant facilement se déformer élastiquement à la flexion et n'étant pas sensible aux chocs. Les versions de supports à plusieurs CD selon l'invention sont dérivées directement du support simple.

Dans une troisième version de support à deux CD, le centrage est aménagé pour clipper deux CD faces gravées contre face gravée, avec ou sans feuille intercalaire. Leur centreur est aménagé pour clipper simultanément ces deux CD, l'épaisseur du centreur étant plus faible que celle de la paroi de l'étui pour la rendre plus "élastique", la portée de clipage des CD 30 étant légèrement conique avec un chanfrein d'entrée.

Selon une quatrième version de support de CD leur paroi comporte un centreur d'un côté et un centreur de l'autre pour recevoir chacun un CD et leur périphérie comporte un épaulement réparti de chaque côté de ladite paroi dont la forme extérieure est carrée, hexagonale ou octogonale.

Selon une cinquième version de support de CD, pour recevoir deux CD face gravée contre face gravée avec ou sans intercalaire, leur centrage et leur maintien s'effectue par l'extérieur du diamètre des CD sur une portée interne limitée soit par deux bossages pouvant être fractionnés, soit par un bossage et une butée.

Selon une sixième version de support de CD, ils sont agencés chacun pour recevoir, immobiliser et protéger chacun deux CD, face gravée contre face gravée, avec ou sans intercalaire, engagés par leur trou central sur un moyeu annulaire d'immobilisation élastiquement déformable comportant soit deux bossages de retenue, soit un bossage et une butée.

Selon une septième version de supports de CD, ils sont agencés chacun pour recevoir, immobiliser et protéger chacun deux CD face gravée contre face gravée, avec ou sans intercalaire, engagés par leur trou central sur un moyeu d'immobilisation élastiquement déformables constitué en deux parties clipées entre elles par des moyens de clipage complémentaires; leur moyeu comporte un pied support pour le rangement vertical dont la base est de la largeur de celle d'un pan d'octogone.

Selon une huitième version de support de CD, ils sont constitués chacun en deux parties de forme extérieure épaulée hexagonale ou octogonale avec une portée conique pour retenir une étiquette, en ce que ces deux parties sont articulées entre elles par une articulation venue de moulage et maintenues fermées entre elles par des pions engagés dans des trous correspondants de l'autre partie, des centreurs, solidaires de l'intérieur de leur paroi respective, immobilisent chacun un CD.

Selon une neuvième version de support de CD, ils sont constitués chacun en deux parties articulées l'une sur l'autre par une charnière venue de moulage, l'une pour recevoir deux CD et l'autre pour recevoir un seul CD et éventuellement un livret, les deux CD sont clipés sur un même centreur et l'autre est clippé sur un centreur pour un seul CD.

Selon une dixième version de support de CD, ils sont constitués chacun en deux parties identiques articulées l'une sur l'autre par une charnière venue de moulage, pour recevoir chacune deux CD, les CD sont clipés par paire, face gravée contre face gravée, sur un centreur correspondant.

Selon une onzième version de support de CD, ils sont constitués chacun en deux parties articulées l'une sur l'autre par une charnière venue de moulage, pour recevoir l'une deux CD clipés, face gravée contre face gravée, sur un centreur correspondant, l'autre paroi n'ayant pas de centreur de façon à recevoir un livret.

Selon une douzième version de support de *CD,* ils comportent chacun une étiquette mince d'identification en matière plastique engagée dans une glissière ménagée sur le côté de l'un des pans de l'étui, en ce qu'une identification complémentaire par familles de CD est constituée par des bâtonnets de couleur unie ou bicolore, voire tricolore, engagés dans un trou crevant partiellement le côté de la face 6 d'un pan de l'étui.

Selon une treizième version de support de CD, leur centreur comporte une épaisseur de la paroi d'appui de la face gravée du CD ou du DVD réduite d'au moins la moitié, en ce que son épaulement de clipage est légèrement conique pour se déformer élastiquement à la mise en place du CD.

Selon une quatorzième version de support de CD, leur centreur est aménagé pour recevoir deux CD face gravée contre face gravée, son cône est plus long et l'épaisseur de sa paroi est réduite de moitié par rapport à celle de la paroi d'appui. Dans le cas ou l'étui reçoit un ou deux CD de l'autre côté de sa paroi, le second centreur est thermosoudé en regard du premier.

Selon une quinzième version de support de CD, leur centreur est aménagé pour recevoir un CD, sa flexibilité est obtenue en fractionnant la surface du cône de clipage par des dégagements en conservant un centre sur lequel on exerce la pression de déclipage.

Selon une seizième version de support de CD, leur centreur comporte, rapporté collé sur son épaulement, une bague en élastomère d'un diamètre très légèrement supérieur à celui du trou central des CD de façon à créer une faible pression de retenue sur celui-ci, en ce que l'éjection s'effectue en poussant sur l'arrière de la face d'appui des CD, au travers de trous.

Selon une dix-septième version de support de CD, leur centreur-éjecteur est aménagé principalement pour recevoir un disque laser DVD, outre le centreur, on a ajouté des moyens d'éjection élastiquement déformables destinés à soulever le CD lorsque l'on appuie sur le milieu du centreur, au moyen d'au moins trois petits plots ou boules en élastomère souple, collés au fond de logements correspondants dont le bord est évasé pour permettre l'écrasement desdits plots lorsque l'on clipe le DVD ou le CD sur l'épaulement du centreur. En variante, l'éjection du DVD peut être effectuée au moyen d'au moins trois lames venues de moulage, ou de lames par exemple métalliques engagées dans une glissière et collées.

Selon une dix-huitième version de support de CD, ils sont stockés dans des boîtes de rangement vertical ou légèrement incliné, la forme de leur section correspond à celle des étuis préférablement octogonale, en ce qu'elle est constituée en deux demi-parties, inférieure opaque ou transludide et supérieure transparente, équipées de moyens complémentaires de clipage entre elles, leurs extrémités sont fermées et munies vers l'extérieur de moyens de clipage avec d'autres boîtes, mâle d'un côté et femelle de l'autre.

On a prévu de pouvoir incliner les étuis d'environ 15° soit en donnant le jeu entre l'extérieur des étuis et l'intérieur de la boîte, soit en modifiant l'angle des pans inférieurs.

Selon une dix-neuvième version d'étuis à CD, ils se présentent sous forme de feuilles de rangement minces et souples à deux, quatre ou huit CD, réalisées en matière plastique transparente comportant thermosoudées dessus et dessous en regard, des plaques entretoises permettant de les souder en paquet et au-delà d'un espace permettant le pliage pour consultation des plaques de rigidification dessus et dessous en longueur et en largeur définissant les emplacements de CD clipés chacun sur un centreur thermosoudés en regard, les centreurs comportent une paroi mince bordée à sa périphérie par une portée de clipage légèrement conique et d'un diamètre permettant un faible serrage sur le trou central des CD et d'un petit chanfrein d'entrée, des fraisages rendent les dents déformables élastiquement pour faciliter le clipage, leur thermosoudure sur la feuille est effectuée sur la partie centrale.

Selon une vingtième version d'étuis à CD, les feuilles de rangement sont thcrmosoudées en paquet sur leurs entretoises et dans un classeur en matière thermoplastique constitué d'une base de 1,5 à au moins 2mm d'épaisseur, d'un dos solidaire de la base par une charnière venue de moulage, d'une couverture solidaire du dos (142) par une seconde charnière; il est fermé par une partie avant re!iée à la base par une autre charnière venue de moulage; une bande de tissu robuste, collée sur la partie avant, comporte, à son extrémité libre, une bande de matériau "scratch" qui vient s'immobi!iser sur une autre bande "scratch" en serrant la couverture contre la feuille supérieure.
Les avantags des supports selon l'invention par rapport à ceux existants sont les suivants:
◆ très grande simplification de fabrication;
◆ très grande simplification et rapidité de manipulation, accès au CD d'une seule main pour son extraction du fait de l'absence de couvercle pour la plupart des modèles; cette extraction s'effectue par une faible pression sur le centreur et à la périphérie du support ;
◆ peu onéreux à fabriquer, une seule pièce dans tous les cas de support et pas de couvercle;
◆ grande robustesse, incassable;
◆ très léger, même avec plusieurs CD, peut être envoyé par la poste dans une enveloppe normale, à très faible coût;
◆ très faible encombrement en épaisseur, 2,5 à 3mm pour 1 CD, 8mm pour quatre CD, au lieu de 24mm pour 3 CD dans les boîtiers classiques;
◆ de forme préférentiellement octogona!e, il peut être posé verticalement ;
   - du fait de l'absence de couvercle, les inscriptions sur le CD sont directement accessibles, l'autre côté étant translucide il permet la lecture d'une étiquette sur laquelle peuvent être inscrites des précisions sur le contenu du CD;
   - classement aisé et de sécurité sur des feuilles minces et souples munies de centreurs maintenant leur position pendant la consultation des différentes pages;
   - rangement dans des boîtiers très simples, peu encombrants et empilables bout à bout verticalement ou horizontalement.

L'invention est décrite en détail dans le texte qui suit en regard des dessins annexés donnés à titre d'exemples non limitatifs, dans lesquels on a montré:
- figure 1, l'exemple le plus simple d'étui non empilable, vu en coupe;
- figure 2, l'exemple le plus simple d'étui empilable, vu en coupe;
- figures 3 et 4, un exemple d'un étui simple pouvant recevoir et immobiliser une étiquette contre laquelle est appuyé le CD à recevoir et protéger;
- figures 5 et 6, des exemples d'empilage vertical d'étuis simples à plat;
- figures 7 et 8, un exemple d'étui recevant deux CD, face gravée l'une contre l'autre, centré par l'extérieur;
- figures 14 et 15, un exemple d'étui double, vue de dessus ouvert et vu en coupe;
- figures 16, 17, 17A et 17B des exemples de marquage des CD;
- figures 18 et 19, des exemples d'étuis simples pouvant recevoir deux et quatre CD;
- figures 20 et 21, des exemples d'étuis doubles pouvant recevoir trois ou quatre CD;
- figure 22, un exemple de centreur de CD;
- figures 23A et 23B, des exemples de centreurs-éjecteurs de CD vus en coupe;
- figures 24 à 26, des exemples de centreurs de CD;
- figures 27 et 28, un exemple de boîte de rangement de CD pouvant être posée à plat ou verticale;
- figure 29, un exemple en coupe de feuille de rangement à plat de 2, 4 ou 8 CD;
- figure 30, un exemple en coupe de centreur de CD sur les feuilles de rangement de CD à plat de la fig. 29;
- figure 31, un exemple vu de dessus de la feuille de rangement de CD à plat de la fig. 29;

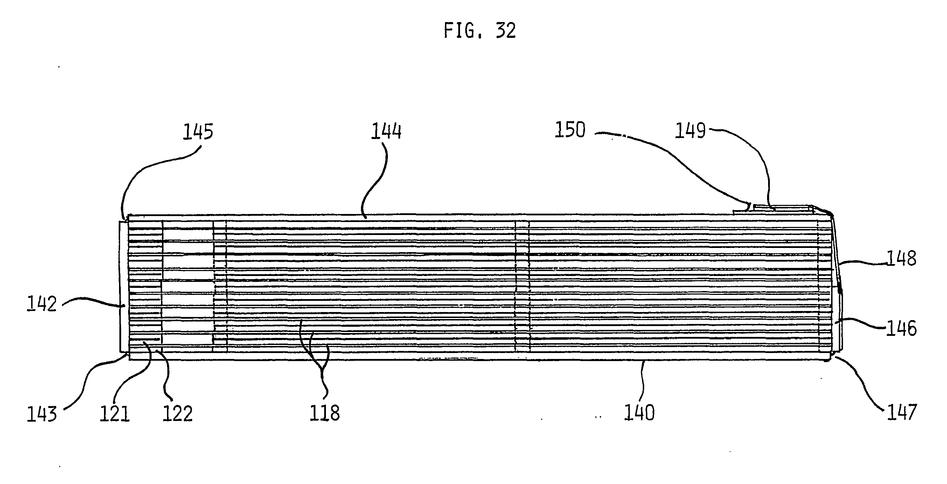

- figure 32, un exemple de feuilles de rangement à plat soudées en paquet sur un classeur.

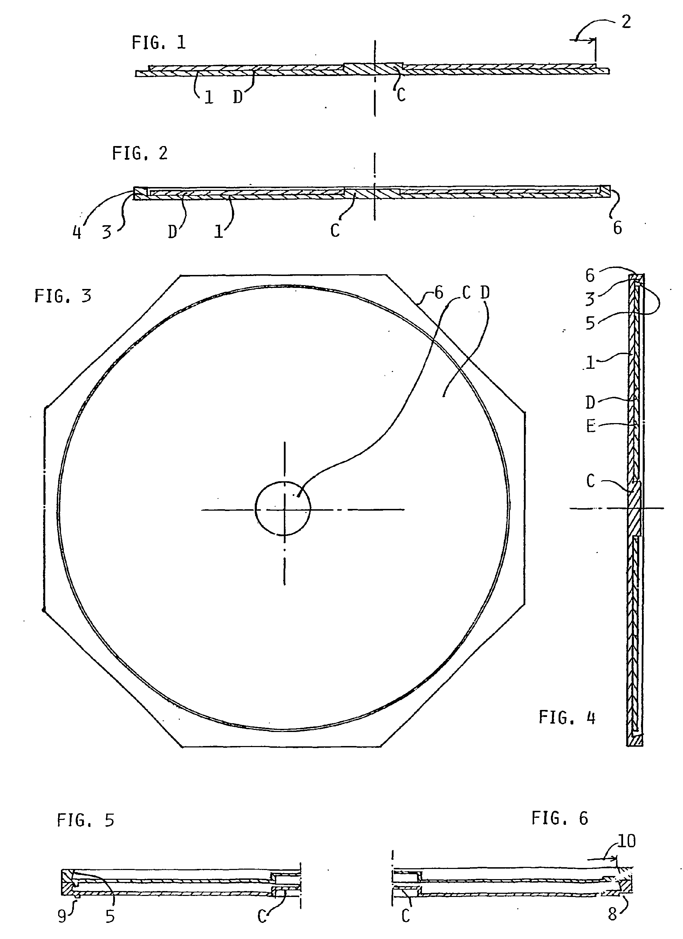

**La** **figure 1** montre l'exemple le plus simple d'étui non empilable, vu en coupe. Il comporte une paroi mince 1 de forme carrée, hexagonale ou octogonale légèrement plus grande que le diamètre 2 du CD D à recevoir sur un centreur C, la face gravée en appui sur la paroi 1 qui la protège, la face non gravée n'étant pas fragile, un couvercle est considéré comme superflu.

**La** **figure 2** montre vu en coupe l'exemple le plus simple d'étui empilable verticalement, sur un épaulement 3 dont l'intérieur présente un petit jeu avec le diamètre 2 du CD et dont la forme extérieure 4 est carrée, hexagonale ou octogonale.

**Les** **figures 3 et 4** montrent un exemple d'étui simple pouvant en outre recevoir et immobiliser une étiquette E portant des informations complémentaires sur le CD, vues par transparence au travers de la paroi 1 contre laquelle est appuyée la face gravée du CD D à recevoir et protéger, au moyen d'une face interne conique 5 retenant la périphérie de l'étiquette par le fond du cône, et dont l'extérieur 6 est de forme carrée, hexagonale ou préférablement octogonale. Ces étuis sont préférablement réalisés en matière plastique transparente relativement flexible. Le déclippage s'effectue en appuyant du pouce sur le milieu du centreur en exerçant simultanément une flexion par le bout des doigts sur le côté arrière de la périphérie de l'étui.

**Les** **figures 5 et 6** montrent des exemples d'empilage vertical d'étuis simples à plat des figures 3 et 4, grâce à un épaulement 8 ou à un bourrelet 9 engagé dans le sommet 10 de la face conique 5.

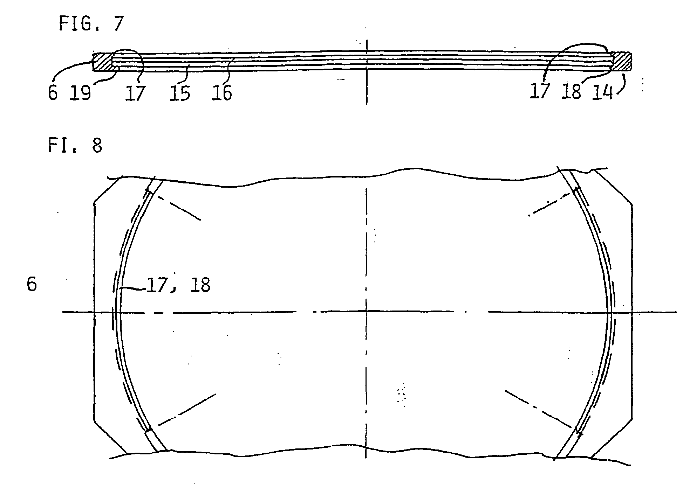

**Les** **figures 7 et 8** montrent un exemple d'étui simplifié 14 recevant deux CD 15, 16, face gravée contre face gravée, avec ou sans feuille intercalaire, centrés et immobilisés par l'extérieur sur un étui dont la forme extérieure 6 est carrée, hexagonale ou octogonale. Cet étui ne comporte pas de paroi de protection des CD puisque leur face gravée sont en appui l'une sur l'autre et se protègent mutuellement. Les CD sont immobilisés sur cet étui après avoir franchi élastiquement un très petit bossage de clippage 17 ou 18 selon le côté d'introduction (partie droite de la coupe). Sur la partie gauche de la coupe, on a montré un épaulement 19 de butée coopérant avec le bossage 17. La figure partielle 8 montre que les bossages de retenue 17 et 18 peuvent être fractionnés en plusieurs parties pour faciliter le clippage des CD.

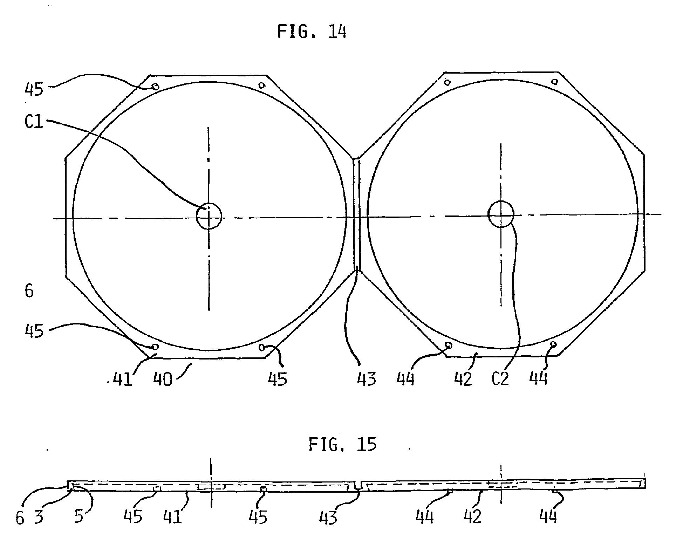

**Les** **figures 14 et 15** montrent un exemple d'étui double 40 vue de dessus ouvert (fig. 14) et vu en coupe (fig. 15). Les deux parties d'étui 41, 42, de forme extérieure 6 octogonale recevant chacune un CD clippé sur son centreur C, sont reliées entre elles chacune par un de leur pan au moyen d'une charnière 43 venue de moulage qui permet de les fermer au moyen de pions 44 coopérant avec des trous de clippage 45.

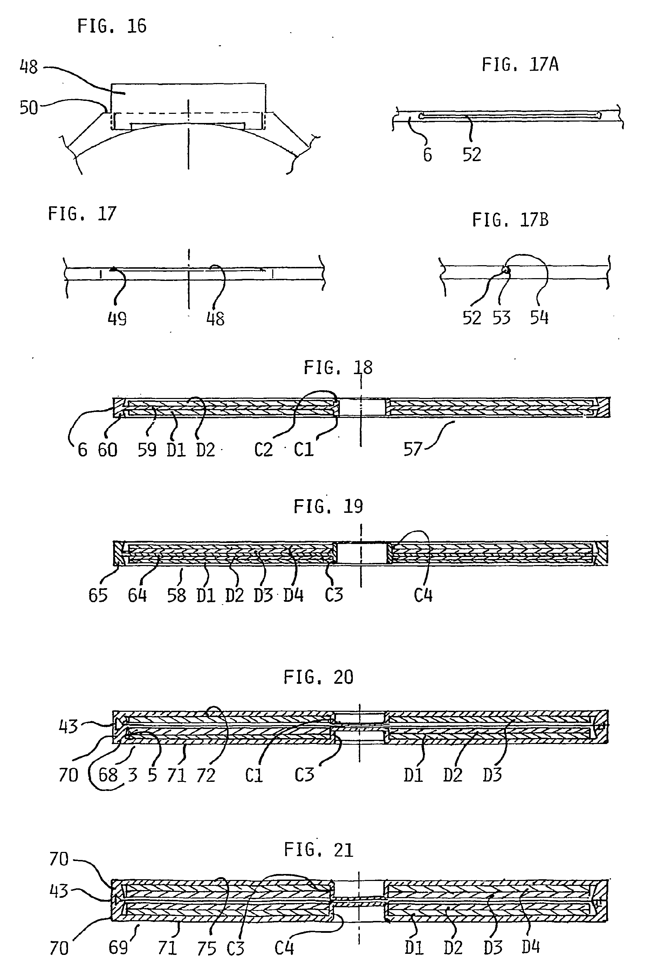

**Les** **figures 16,17, 17A et 17B** montrent des exemples de marquage des CD. Une étiquette mince 48 en matière plastique est engagée dans une glissière 49 ménagée sur le côté de l'un des pans 50 de l'étui dans le cas de classement vertical. Cette étiquette peut recevoir une information de classement personnalisée. Les figures 17A et 17B montrent un exemple complémentaire d'identification par familles de CD constitué par des bâtonnets 52 de couleur unie, bicolore ou tricolore, engagés dans un trou 53 crevant partiellement le côté 54 la face 6 d'un pan de l'étui.

**Les** **figures 18 et 19** montrent des exemples d'étuis simples 57 et 58 pouvant recevoir deux et quatre CD. **La** **figure 18** montre un exemple d'étui 57 aménagé pour recevoir un CD D1 et un CD D2 de chaque côté de sa paroi 59, clippé chacun sur un centreur correspondant C1, C2. Il comporte un double épaulement 60 qui peut ne pas être conique dans le cas où l'on utilise pas d'étiquettes du fait qu'elle ne seront pas visibles. Dans le cas ou l'on utilise une étiquette par CD, celle-ci donne des informations complémentaires sur le contenu du CD, les informations principales figurant sur les faces non gravées se trouvant visibles à l'extérieur.
**La** **figure 19** montre un exemple d'étui simple 58 recevant de chaque côté de sa paroi 64 deux CD dont la face gravée est en appui l'une sur l'autre avec ou sans étiquette intercalaire. Leur centreurs C3, C4 sont un peu plus long que les centreurs C1, C2 pour permettre de clipper simultanément deux CD. On les déclippent de la même façon que sur les autres étuis.
L'épaisseur du double épaulement 65 est la même que celle des centreurs pour permettre leur rangement vertical ou leur empilage vertical.

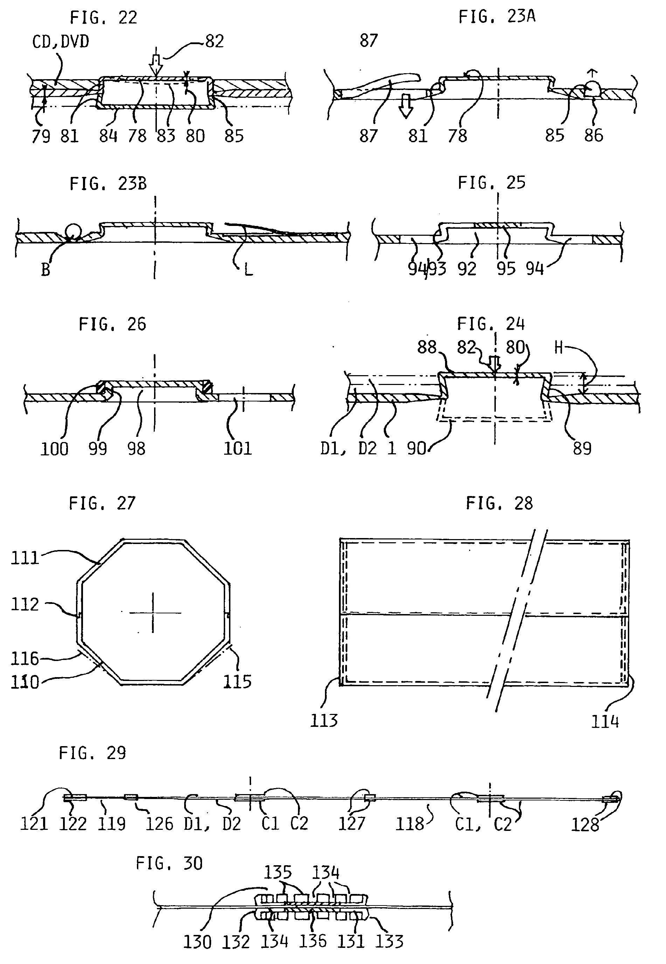

**Les** **figures 20 et 21** montrent des exemples de supports doubles 68, 69 pouvant recevoir trois ou quatre CD. Ces supports sont analogues à ceux des figures 14 et 15. La figure 20 montre un exemple de support double à trois CD D1, D2, D3, deux D1, D2 sur la partie gauche 71 et un 03 sur la partie droite 72. La partie gauche 71 a une épaisseur plus grande de l'épaulement 70, un peu supérieure à celle des centreurs C3 recevant deux CD que celle de la partie droite 72 ne recevant qu'un CD. Les deux partie 71 s'articulent sur une charnière souple 43 venue de moulage. La partie 72 peut recevoir une étiquette contre sa paroi et la partie 71 en intercalaire entre les deux CD. Les faces non gravées des trois CD sont visibles, l'une de l'extérieur et les deux autres en ouvrant le support.
La figure 21 montre un support double 69 à deux parties symétriques 71,75 recevant chacune deux CD DI, D2 et 03, D4 face gravée contre face gravée, dont les quatre faces non gravées porteuses d'informations sont visibles de l'extérieur par transparence et de l'intérieur en ouvrant 15 le support.
**Les** **figures 22 à 26** montrent des exemples de centreurs de CD vus en coupe. La figure 22 montre an exemple de centreur 78 L'épaisseur 79 de la paroi d'appui de la face gravée du CD ou du DVD est réduite d'au moins la moitié 80 sur le centreur pour le rendre élastiquement déformable. L'épaulement de clipage 81 est légèrement conique pour se déformer élastiquement à la mise en place du CD. Lorsque l'on appuie sur le milieu du centreur, flèche 82, la paroi se déforme selon les traits pointillés 83, ce qui a pour effet de réduire le diamètre de l'épaulement 81. Si on crée simultanément une flexion inverse sur l'extérieur de l'étui, le CD se dégage de son centreur .Le second centreur 84, identique au premier, est rapporté thermosoudé en regard du premier en 85.

**Les** **figures 23A et 23B** montrent un exemple de support à centreur-éjecteur aménagé principalement pour recevoir un disque laser du type DVD. II comporte le même centreur que celui de la figure 22 auquel on a ajouté des moyens d'éjection élastiquement déformables destinés à soulever le CD lorsque l'on appuie sur le milieu du centreur Cette éjection peut être obtenue de plusieurs façons, soit au moyen d'au moins trois petits plots 85 en élastomère souple, coilés au fond de logements correspondants 86 dont le bord est évasé pour permettre l'écrasement desdits plots lorsque l'on clipe le DVD ou le CD sur l'épaulement 81 du centreur. L'extrémité libre des plots 85 est demi-sphérique et de la même hauteur que celle du centreur, soit en remplaçant les plots 85 par des boules B en élastomères (fig. 23B) adhérisées sur des empreintes correspondantes; soit encore au moyen d'au moins trois lames 87 (côté droit des fig. 23A et 238) venues de moulage, ou de lames par exemple métalliques L engagées dans une glissière et collées (fig. 238). Lorsque l'on appuie sur le milieu 82 du centreur, le support étant posé à plat sur une table, les plots 85, les boules ou les lames 87 soulèvent et dégagent le DVD de son centreur.

**La** **figure 24** montre un autre exemple de centreur 88 pour recevoir deux CD D1, D2 face gravée contre face gravée. Sa forme est similaire à celle du centreur de la figure 22, mais il est plus haut pour recevoir et retenir deux CD au lieu d'un, le cône 89 ayant une pente un peu plus faible. Les deux CD se déclipent de la même façon que sur la figure 22. Pour recevoir un ou deux CD supplémentaires sur l'autre face de la paroi 1, un centreur 90 pour un ou deux CD 10 est thermosoudé en regard du premier.

**La** **figure 25** montre un autre exemple de centreur 92 pour un CD; sa flexibilité est obtenue en fractionnant la surface 93 du cône de clipage par des dégagements 94 en conservant un centre 95 sur lequel on exerce la pression de déclipage. Pour recevoir 2 CD on accroît la hauteur du centreur de l'épaisseur d'un CD. Comme pour les autres modèles de centreurs on peut thermosouder un second centreur sur l'autre face du support.

**La** **figure 26** montre un autre exemple de centreur 98 sur l'épaulement 99 duquel on a rapporté collé un bague 100 en élastomère d'un diamètre très légèrement supérieur à celui du trou central des CD de façon à créer une faible pression de retenue sur celui-ci. Lléjection s'effectue en poussant sur l'arrière de la face d'appui des CD, au travers de trous 101.

**Les** **figures 27 et 28** montrent un exemple de boîte de rangement vertical ou légèrement incliné de CD, ces boîtes pouvant être posées à plat ou verticalement. La forme de la section de la boîte correspond à celle des supports préférablement octogonale. Elle est constituée en deux demi-parties 110 inférieure opaque ou translucide et 111 supérieure transparente. Les deux demi- parties 110, 111 sont équipées de moyens complémentaires 112 de clipage entre elles.
Les deux extrémités des deux demi-parties sont fermées et munies vers l'extérieur de moyens de clipage avec d'autres boîtes, mâle 113 d'un côté et femelle 114 de l'autre.
Pour permettre de consulter visuellement les CD en absence de marques, on a prévu de pouvoir incliner les étuis d'environ 15° soit en donnant le jeu entre l'extérieur des étuis et l'intérieur de la boîte, soit en agrandissant légèrement l'angle 115, 116 des pans.

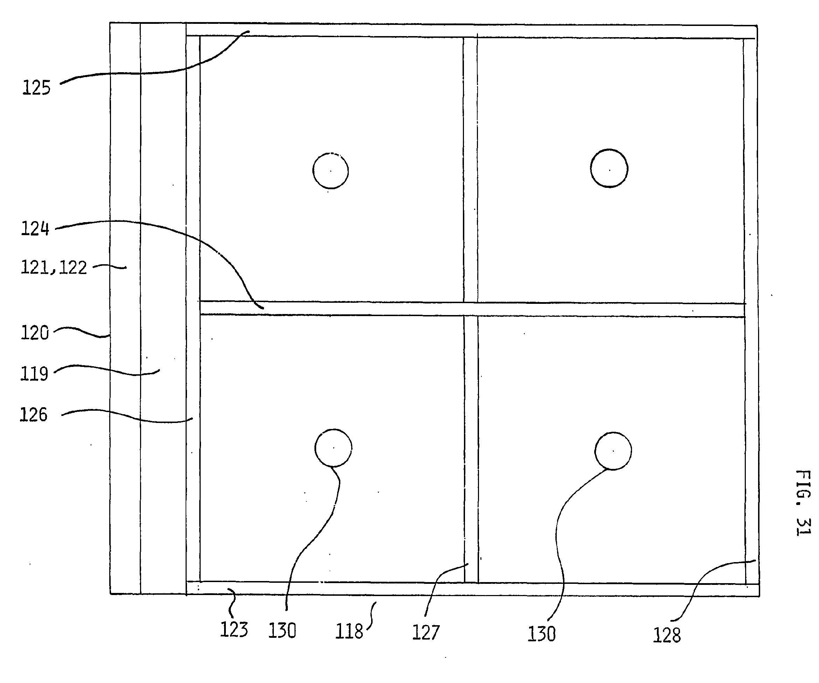

**Les** **figures 29 et 30** montrent un exemple, en coupe en élévation et vue de dessus, d'une feuille mince et souple de rangement à plat de 2, 4 ou 8 CD. Cette feuille 118 en matière plastique transparente comporte thermosoudées, dessus et dessous en regard, des plaques entretoises 120, 121 permettant de souder lesdites feuilles en paquet ( fig.31) un espace 119 permettant le pliage pour consultation et des plaques de rigidification thermosoudées dessus et dessous 123, 124, 125 en longueur et 126, 127, 128 en largeur, définissant les emplacements de CD. Les CD sont clipés chacun sur un centreur 130 montré en coupe figure 30, thermosoudé en regard dessus et dessous la feuille. Il comporte une paroi mince 131 bordée à sa périphérie par une portée de clipage 132 légèrement conique et d'un diamètre permettant un serrage de retenue suffisant sur le trou central des CD et un petit chanfrein d'entrée 133. Des fraisages 134 rendent les dents 135 déformables élastiquement pour faciliter le clipage. La thermosoudure sur la feuille est effectuée uniquement sur la partie centrale 136 pour conserver la souplesse des dents de clipage.

**La** **figure 31** montre un exemple de feuilles 118 de rangement à plat soudées en paquet 10 sur un classeur 140 en matière thermoplastique constitué d'une base 141 de 1,5 à au moins 2mm d'épaisseur, d'un dos 142 solidaire de la base par une charnière 143 venue de moulage, d'une couverture 144 solidaire du dos 142 par une seconde charnière 145. Le classeur est fermé par une partie avant 146 reliée à la base par une autre charnière 147 venue de moulage. Une bande 148 de tissu robuste, collée sur la partie avant 146, comporte, à son extrémité libre, une bande 149 de matériau «scratch» qui vient s'immobiliser sur un autre bande « scratch » 150 en serrant la couverture 144 contre la feuille 118 du dessus mettant l'ensemble des CD hors poussière. Le classeur en matière plastique peut être recouvert d'un tissus décoratif.

## Revendications

1. Support d'un ou plusieurs disques laser clipés élastiquement sur un ou des centreurs, moulés en une seule pièce munie d'une paroi comportant un épaulement périphérique, en ce que la paroi (1) est munie d'au moins un centreur sur au moins une de ses deux faces pour recevoir au moins un CD sur au moins une desdites faces, clipés sur au moins un centreur (C), en ce que l'épaulement périphérique (3) est agencé pour protéger le ou les CD engagés sur le ou les centreurs et comporte intérieurement une portée conique ou à picots (5) sur au moins une de ses deux faces pour retenir et immobiliser une étiquette engagée élastiquement dans le cône qui la retient et dont la forme extérieure est octogonale pour pouvoir les poser verticalement (fig.3, 4) ; en ce qu'il est configuré pour être empilé et ne nécessite pas de couvercle ; en ce qu'il est réalisé en matériau plastique semi-rigide.

2. Support selon la revendication 1, **caractérisé en ce qu'**il est rendu empilable au moyen d'une portée (8) ou d'un bourrelet (9) s'engageant sur l'extrémité du cône (10) du précédent, les empêchant de glisser latéralement de la pile.

3. Support selon l'une des revendications 1 et 2, comportant une paroi rigide (59) munie d'un centreur (CI) d'un côté et d'un centreur (C2) de l'autre pour recevoir chacun un CD (D1, D2), **caractérisés en ce que** sa périphérie comporte un épaulement (60) réparti également de chaque côté de la paroi (59) dont la forme extérieure est octogonale.

4. Support double selon les revendications 1 et 2, **caractérisé en ce qu'**il est réalisé en une seule pièce (fig.14) constituée de deux supports simples identiques (41,42) (fig.3,4) comportant chacun un épaulement périphérique octogonal (3,6), reliés entre eux par une charnière souple (43 fig. 14,.20) venue de moulage sur les pans octogonaux en regard et comportant des moyens de fermeture complémentaires moulés (44, 45), leurs centreurs de CD se trouvant chacun du côté intérieur de la paroi dudit support.

5. Support double selon la revendication 4, **caractérisé en ce que** les deux supports simples, (71,72, fig. 14 et 20) comportant un épaulement périphérique octogonal (3,6), sont reliés entre eux par une charnière souple (43) venue de moulage sur les pans octogonaux en regard de l'épaulement (6) et comporte des moyens de fermeture complémentaires moulés (44, 45), leur centreur (C3, 88) recevant deux CD du côté intérieur desdits supports, et le second d'un centreur (CI, 78, 92, 98) pour recevoir un seul CD et éventuellement un livret ou bien pas de centreur et seulement un livret.

6. Support double selon l'une des revendications 4 et.5, **caractérisés en ce que** les deux supports simples identiques (71,75) (fig.14, 21) comportant un épaulement périphérique octogonal (3,6), reliés entre eux par une charnière souple (43) venue de moulage sur l'un des pans octogonaux en regard et se refermant avec des moyens de fermeture complémentaires moulés (44, 45), sont munis chacun d'un centreur (C3, 88) pour recevoir deux CD, se trouvant chacun du côté intérieur desdits supports.

7. Support selon l'une des revendications précédentes, comportant chacun une étiquette d'identification **caractérisé en ce que** cette étiquette mince (48), réalisée en matière plastique, est engagée dans une glissière (49) ménagée sur le côté de l'un des pans (50) du support, **en ce qu'**une identification complémentaire par familles de CD est constituée par des bâtonnets (52) de couleur unie, bicolore ou tricolore, engagés dans un trou (53) crevant partiellement le côté (54) de la face (6) d'un pan du support.

8. Support selon l'une des revendications précédentes, **caractérisé en ce que** son centreur (88) est aménagé pour recevoir deux CD (D1, D2) face gravée de l'un contre face gravée de l'autre, il comporte un cône (89) plus long que l'épaisseur de deux CD et son épaisseur est réduite par rapport à celle de la paroi d'appui (1).

9. Support selon l'une des revendications précédentes, comportant un moyen d'éjection des CD **caractérisé en ce que** son centreur (98) comporte, rapporté collé sur son épaulement (99), une bague en élastomère (100) d'un diamètre très légèrement supérieur à celui du trou central des CD de façon à créer une faible pression de retenue sur le CD, **en ce que** l'éjection s'effectue en poussant sur l'arrière de la face d'appui des CD, au travers de trous (101).

10. Support selon l'une des revendications 1 à 8, dont le centreur-éjecteur est aménagé principalement pour recevoir un CD, **caractérisés en ce que** les moyens d'éjection du CD sont constitués par trois petits plots (85 fig.23A) en élastomère souple collés au fond de logements correspondants (86) dont le bord est évasé pour permettre leur écrasement lorsque l'on clipe le CD sur l'épaulement (81) du centreur, **en ce que** l'extrémité libre des plots (85) est demi- sphérique et de la même hauteur que celle du centreur.

11. Support selon l'une des revendications 1 à 8, **caractérisé en ce que** l'éjection du CD de son centreur est effectuée au moyen de petites boules (B) en élastomère (fig.23B) adhérisées sur des empreintes correspondantes.

12. Support selon l'une des revendications 1 à 8, **caractérisé en ce que** l'éjection du CD de son centreur est effectuée au moyen de trois lames métalliques (L) engagées chacune dans une glissière correspondante et collées (fig.23B).

13. Support selon l'une des revendications 1 à 8, **caractérisé en ce que** lorsqu'ils reçoivent un ou deux CD sur sa seconde face en plus de celui ou de ceux reçus sur sa première face, le second centreur est rapporté thermosoudé en regard du premier centreur (fig.22,24).

14. Support selon l'une des revendications précédente, **caractérisé en ce qu'**il est stocké verticalement ou légèrement incliné dans des boîtes de rangement dont la forme de leur section correspond à celle de la forme extérieure du support préférablement octogonale, **en ce qu'**elles sont constituées de deux demi-parties (110) inférieure opaque ou translucide, et (111) supérieure transparente, équipées chacune de moyens complémentaires (112) de clipage entre elles, **en ce que** leurs extrémités sont fermées et munies vers l'extérieur de moyens de clipage avec d'autres boîtes, mâles (113) d'un côté et femelle (114) de l'autre, **en ce que** l'on a prévu de pouvoir incliner les étuis d'environ 15°, soit en donnant du jeu entre l'extérieur des supports et l'intérieur de la boîte, soit en augmentant légèrement l'angle (115, 116) des côtés inférieurs de la boîte.

15. Support selon l'une des revendications précédentes, **caractérisé en ce qu'**il se présente sous forme d'une feuille mince et souple de rangement (118) à deux, quatre ou huit CD, réalisée en matière plastique transparente comportant thermosoudées dessus et dessous en regard, des plaques entretoises (120, 121) permettant de souder lesdites feuilles en paquet, un espace (119) permettant le pliage pour consultation, et des plaques de rigidification thermosoudées dessus et dessous (123, 124, 125) en longueur, et (126, 127, 128) en largeur, définissant les emplacements de CD clipés chacun sur un centreur (130) thermosoudé en regard, **en ce que** lesdits centreurs comportent chacunune paroi mince (131) bordée à sa périphérie par une portée de clipage (132) légèrement conique avec un petit chanfrein d'entrée (133), d'un diamètre permettant un faible serrage sur le trou central des CD, des fraisages (134) rendent les dents (135) déformables élastiquement pour faciliter le clipage, leur thermosoudure sur la feuille souple est effectué uniquement sur la partie centrale (136).

16. Support selon la revendication 15, **caractérisé en ce que** les feuilles (118) de rangement de CD sont soudées en paquet sur leurs entretoises (121, 122).

17. Support selon l'une des revendications 15 et 16, **caractérisé en ce que** les feuilles (118) de rangement de CD sont thermo-soudées en paquet dans un classeur (140) en matière thermoplastique constitué d'une base (141) d'épaisseur de 1,5mm à au moins 2mm, d'un dos (142) solidaire de la base par une charnière souple (143) venue de moulage, d'une couverture (144) rendue solidaire du dos (142) par une seconde charnière souple (145), **en ce qu'**il est fermé par une partie avant (146) reliée à la base par une autre charnière souple (147) venue de moulage, **en ce qu'**une bande souple (148) de tissu robuste, collée sur la partie avant (146) comporte, à son extrémité libre, une bande (149) de matériau «scratch» qui vient s'immobiliser sur une autre bande «scratch» (150) en serrant la couverture (144) contre la feuille (118) du dessus.

## Claims

1. Case for one or several laser discs clipped elastically onto one or several centring means, integrally moulded provided with a wall including a peripheral shoulder, in that the wall (1) is provided with at least one centring means on at least one of its two faces to house at least one CD on at least one of said faces, clipped onto at least one centring means (C), in that the peripheral shoulder (3) is designed to protect the CDs that are engaged on the centring means and interiorly includes a conical bearing or provided with pins (5) on at least one of its two faces to retain and immobiliser a label engaged elastically in the cone retaining it and whose outer shape is octagonal in order to be able to stacked vertically (fig. 3, 4): in that it is configured to be stacked and does not require a cover; in that it is made from semirigid plastic material.

2. Case according to claim 1, **characterised in that** it is made stackable using a shoulder (8) or a flange (9) engaging on the end of the cone (10) of the preceding one, preventing them from sliding laterally from the stack.

3. Case according to any of claims 1 and 2, comprising a rigid wall (59) provided with a centring means (C1) on one side and a centring means (C2) on the other side to each house one CD (D1, D2), **characterised in that** the periphery thereof includes a shoulder (60) also distributed on each side of the wall (59) whose outer shape is octagonal.

4. Double case according to claims 1 and 2, **characterised in that** it is of an integral nature (fig. 14) comprised of two simple identical cases (41, 42) (fig. 3, 4) each including an octagonal peripheral shoulder (3, 6), joined together by a moulded flexible hinge (43 fig. 14, 20) on the opposite octagonal edges and including additional moulded means of closing (44, 45), the CD centring means thereof each located on the interior side of the wall of said case.

5. Double case according to claim 4, **characterised in that** the two simple cases, (71, 72, fig. 14 and 20) including an octagonal peripheral shoulder (3, 6), are joined together by a moulded flexible hinge (43) on the octagonal edges opposite the shoulder (6) and include additional moulded means of closing (44, 45), the centring means (C3, 88) thereof housing two CDs on the interior side of said cases, and the second with centring means (C1, 78, 92, 98) to house a single CD and possibly a booklet or with no centring means and only a booklet.

6. Double case according to any of claims 4 and 5, **characterised in that** the two simple identical cases (71, 75) (fig. 14, 21) including an octagonal peripheral shoulder (3, 6), joined together by a moulded flexible hinge (43) on one of the opposite octagonal edges and closing with additional moulded means of closing (44, 45), are each provided with a centring means (C3, 88) to house two CDs, each located on the interior side of the wall of said cases.

7. Case according to any of the preceding claims, each including an identification label **characterised in that** this thin label (48), made of plastic material, is engaged in a groove (49) cut into the side of one of the edges (50) of the case, **in that** an additional identification by CD families is comprised by rods (52) of one, two or three colours, engaged in a hole (53) sunk partly into the side (54) of face (6) of an edge of the case.

8. Case according to any of the preceding claims, **characterised in that** son centring means (88) is designed to house two CDs (D1, D2) with their recorded faces against one another, it includes a cone (89) that is longer than the thickness of two CDs and its thickness is reduced compared with that of the bracing wall (1).

9. Case according to any of the preceding claims, comprising a means of ejection of CDs **characterised in that** the centring means thereof (98) include, attached by bonding on shoulder (99), an elastomeric ring (100) with a diameter very slightly larger than that of the central hole of the CDs, in order to create a slight retaining pressure thereon, **in that** the ejection is achieved by pushing on the rear of the bracing face of the CDs, through holes (101).

10. Case according to any of claims 1 to 8, with centring-and-ejection means designed mainly to house a CD, **characterised in that** the ejection means of the CD are comprised of three small studs (85 fig. 23A) of flexible elastomer, bonded to the bottom of corresponding seats (86) whose rim is flared to permit the said studs to be pressed flat when the CD is clipped onto shoulder (81) of the centring means, **in that** the free end of studs (85) is hemispherical and of the same height as that of the centring means.

11. Case according to any of claims 1 to 8, **characterised in that** the ejection of the CD from its centring means is achieved by small elastomeric balls (B) (fig. 23B) adhered onto corresponding indentations.

12. Case according to any of claims 1 to 8, **characterised in that** the ejection of the CD from its centring means is achieved by three metal prongs (L) each engaged in a corresponding groove and bonded (fig. 238).

13. Case according to any of claims 1 to 8, **characterised in that** when they house one or two CDs on the second face thereof in addition to that or those housed on its first face, the second centring means is heat-sealed opposite the first centring means (fig. 22, 24).

14. Case according to any of the preceding claims, **characterised in that** it is stored vertically or slightly inclined in storage boxes of which the shape of the section therein corresponds to that of the outer shape of the cases, preferably octagonal, **in that** they are comprised of two lower opaque or translucent (110), and upper transparent (111) half parts, each equipped with additional means (112) for clipping onto one another, **in that** the ends thereof are closed and are provided on the outside with means of clipping onto other boxes, male (113) on one side and female (114) on the other side, **in that** it is possible to incline the cases by about 15°, either by allowing play between the outside of the cases and the inside of the box, or by slightly increasing the angle (115) 116) of the lower side of the box.

15. Case according to any of the preceding claims, **characterised in that** it has the form of thin and flexible storage trays (118) for two, four or eight CDs, made of transparent plastic material, provided with oppositely disposed heat-sealed top and bottom spacer plates (120, 121) with which said trays can be heat-sealed as a package and a space (119) that permits bending for browsing purposes, and heat-sealed top and bottom stiffening plates (123, 124, 125) disposed longitudinally, and transversely (126, 127, 128), defining the positions of the CDs which are each clipped onto oppositely disposed heat-sealed centring means (130), **in that** said centring means each being provided with one thin wall (131) bordered along its periphery by a slightly conical clip-on bearing surface (132) with a small introductory chamfer (133), whose diameter permits light clamping on the central hole of the CDs, milled portions (134) making the teeth (135) elastically deformable to facilitate clip-on action, their heat-sealing to the tray being effected only on the central part (136).

16. Case according to claim 15, **characterised in that** the CD storage trays (118) are heat-sealed as a package onto their spacer plates (121, 122).

17. Case according to any of claims 15 and 16, **characterised in that** the CD storage trays (118) are heat-sealed as a package in an organiser (140) of thermoplastic material comprising a base (141) having a thickness of 1.5 to at least 2 mm, a back (142) integral with the base via an integrally moulded hinge (143), a cover (144) integral with the back (142) via a second flexible hinge (145), **in that** it is closed by a front part (146) joined to the base via another integrally moulded hinge (147), **in that** a flexible strip (148) of sturdy fabric, bonded to the front part (146) is provided at its free end with a strip (149) of "velcro" material, which can be fixed securely to another "velcro" strip (150) by pressing the cover (144) against the upper tray (118).

## Patentansprüche

1. Aufnahme für einen oder mehrere Laser-Datenträger, die elastisch auf einen oder mehreren Zentriervorrichtungen einrasten, die einstückig an einer starren Wand angeformt sind, die eine umgehende Schulter besitzt, **dadurch gekennzeichnet, dass** die Wand (1) mit mindestens einer Zentriervorrichtung auf mindestens einer ihrer beiden Seiten versehen ist, um mindestens eine CD auf mindestens einer dieser Seiten aufzunehmen, wobei dies durch Einrasten auf mindestens einer Zentriervorrichtung (C) erfolgt; dass die umgehende Schulter (3) so gestaltet ist, dass die auf der bzw. den Zentriervorrichtungen einrastenden CDs geschützt sind, und mindestens eine konische oder gezahnte Fläche (5) auf mindestens einer ihrer beiden Seiten besitzt, um ein Etikett aufzunehmen und festzuhalten, das elastisch in den Konus eingesetzt ist, der es festhält und dessen Außenform achteckig ist, um sie senkrecht abstellen zu können (Fig. 3, 4); dass sie so gestaltet ist, dass sie gestapelt werden kann und keinen Deckel benötigt; dass sie aus halbelastischem Werkstoff gefertigt ist.

2. Aufnahme nach Anspruch 1, **dadurch gekennzeichnet, dass** sie anhand einer Auflagefläche (8) und eines Wulstes (9), der auf dem Ende des Konus (10) aufliegt, stapelbar ist, wodurch ein seitliches Abrutschen des Stapels vermieden wird.

3. Aufnahme nach einem der Ansprüche 1 und 2 mit einer starren Wand (59), die mit einer Zentriervorrichtung (C1) auf der einen Seite und mit einer Zentriervorrichtung (C2) auf der anderen Seite versehen ist, um jeweils eine CD (D1, D2) aufzunehmen, **dadurch gekennzeichnet, dass** sie auf der Außenseite eine Schulter (60) besitzt, die gleichmäßig auf jeder Seite der Wand (59) verteilt ist, deren äußere Form achteckig ist.

4. Doppelte Aufnahme nach- Anspruch 1 und 2, **dadurch gekennzeichnet, dass** sie einem Stück (Fig. 14) hergestellt ist, das aus zwei identischen einfachen Teilen (41, 42) besteht (Fig. 3, 4), von denen jedes eine achteckige umgehende Schulter (3, 6) besitzt und die untereinander durch ein flexibles, an den gegenüberliegenden achteckigen Kanten angeformtes Scharnier (43, Fig. 14, 20) verbunden sind, und zusätzliche angeformte Mittel zum Schließen (44, 45) besitzt, wobei ihre CD-Zentriervorrichtungen jeweils auf der Innenseite der besagten Wand befinden.

5. Doppelte Aufnahme nach Anspruch 4, **dadurch gekennzeichnet, dass** die beiden einfachen Aufnahmen (71, 72, Fig. 14 und 20), die jeweils eine achteckige umgehende Schulter (3, 6) besitzen, untereinander durch ein angeformtes flexibles Scharnier (43) an den der Schulter (6) gegenüberliegenden achteckigen Kanten verbunden sind und angeformte Mittel zum zusätzlichen Schließen (44, 45), ihre Zentriervorrichtung (C3, 88) zwei CDs auf der Innenseite dieser Aufnahmen und die zweite eine Zentriervorrichtung (C1, 78, 92, 98) für die Aufnahme einer einzigen CD und ggf. eines Booklets oder keiner Zentriervorrichtung, sondern nur eines Booklets besitzen.

6. Doppelte Aufnahme nach Anspruch 4 und 5, **dadurch gekennzeichnet**, die beiden einfachen identischen Teilen (71, 75) (Fig. 14, 21), von denen jedes eine achteckige umgehende Schulter (3, 6) besitzt und die untereinander durch ein flexibles, an den gegenüberliegenden achteckigen Kanten angeformtes Scharnier (43) verbunden sind, und sich zusätzlichen angeformten Mitteln zum Schließen (44, 45) schließen lassen, jeweils eine Zentriervorrichtung (C3, 88) zur Aufnahme von zwei CDs besitzen, die sich jeweils auf der Innenseite der besagten Aufnahmen befinden.

7. Aufnahme nach einem der vorhergehenden Ansprüche, von denen jede ein Identifizierungsetikett besitzt, **dadurch gekennzeichnet, dass** dieses dünne Etikett (48) aus Kunststoff in eine Führung (49) eingeschoben wird, die sich auf der Seite einer der beiden Kanten (50) der Aufnahme befindet, dass eine zusätzliche Identifizierung nach CD-Familien durch ein-, zwei- oder auch dreifarbige Stifte (52) gebildet wird, die in ein Loch (53) eingeführt werden, das teilweise die Seite (54) der Fläche (6) einer Kante der Aufnahme durchbricht.

8. Aufnahme nach einem der vorhergehenden Ansprüche, **dadurch gekennzeichnet, dass** ihre Zentriervorrichtung (88) so gestaltet ist dass sie zur Aufnahme von zwei CDs (D1, D2) geeignet ist, wobei sich die beiden eingebrannten Seiten gegenüberliegen, und die Zentriervorrichtung einen Konus (89) besitzt, der länger als die Stärke der beiden CDs ist, und seine Wandstärke gegenüber der der Auflagewand (1) verringert ist.

9. Aufnahme nach einem der vorhergehenden Ansprüche mit einer Vorrichtung zum Ausrasten von CDs, **dadurch gekennzeichnet, dass** ihre Zentriervorrichtung (98) einen an deren Schulter (99) angeklebten Ring aus Elastomer (100) besitzt, dessen Durchmesser sehr geringfügig größer ist als der des Zentrallochs der CDs, so dass ein schwacher Festhaltedruck darauf ausgeübt wird, und dass das Ausrasten durch Drücken auf die Rückseite der CD-Auflagefläche durch Aussparungen (101) hindurch erfolgt.

10. Aufnahme nach einem der Ansprüche 1 bis 8, deren Zentrier- und Ausrastvorrichtung hauptsächlich zur Aufnahme einer CD ausgelegt ist, **dadurch gekennzeichnet, dass** die Mittel zum Ausrasten der CD aus drei kleinen Nippeln (85, Fig. 23A) aus flexiblem Elastomer bestehen, die am Boden entsprechender Aufnahmen (86) angeklebt sind, deren Rand trichterförmig aufgeweitet ist, um das Zusammendrücken dieser Nippel zu ermöglichen, wenn die CD auf die Schulter (81) der Zentriervorrichtung einrastet, und dass das freie Ende der Nippel (85) halbkugelförmig ist und sich in derselben Höhe wie die Zentriervorrichtung befindet.

11. Aufnahme nach einem der Ansprüche 1 bis 8, **dadurch gekennzeichnet, dass** das Ausrasten der CD aus seiner Zentriervorrichtung durch kleine Kugeln (B) aus Elastomer (Fig. 23B), die auf den entsprechenden Vertiefungen anhaften, erfolgt.

12. Aufnahme nach einem der Ansprüche 1 bis 8, **dadurch gekennzeichnet, dass** das Ausrasten der CD aus seiner Zentriervorrichtung durch drei jeweils in eine Führung eingesetzte und eingeklebte Lamellen (L) aus Metall erfolgt (Fig. 23B).

13. Aufnahme nach einem der Ansprüche 1 bis 8, **dadurch gekennzeichnet, dass** bei Aufnahme von einer oder zwei CDs auf der zweiten Seite zusätzlich zu dem auf der ersten Seite, die zweite Zentriervorrichtung durch Wärmeschweißung gegenüber der ersten Zentriervorrichtung angebracht wird (Fig. 22, 24).

14. Aufnahme nach einem der vorhergehenden Ansprüche, **dadurch gekennzeichnet, dass** sie in Boxen zum senkrechten oder leicht schrägen Einordnen gelagert, wobei die Form ihres Querschnitts der einer vorzugsweise achteckigen Aufnahme entspricht, dass sie aus zwei Hälften besteht, nämlich einer unteren (110) aus opakem oder durchscheinendem Werkstoff und einer oberen (111) aus durchsichtigem Werkstoff, wobei sie mit zusätzlichen Mitteln (112) zum gegenseitigen Einrasten versehen sind und ihre Enden abgeschlossen und nach außen mit Mitteln zum Einrasten innen (113) und außen (114) mit anderen Behältern versehen sind, und dass vorgesehen ist, die Etuis um ca. 15 Grad schräg stellen zu können, was entweder durch Verschaffen eines Spiels zwischen der Außenseite der Etuis und der Innenseite des Behälters, oder durch leichtes Vergrößern des Kantenwinkels (115, 116) geschehen kann.

15. Aufnahme nach einem der vorhergehenden Ansprüche, **dadurch gekennzeichnet, dass** sie die Form eines dünnen und flexiblen Blatts (118) zum flachen Einordnen von zwei, vier oder acht CDs hat, das aus durchsichtigem Kunststoff besteht und oben und unten gegenüberliegende, durch Wärmeschweißung angebrachte Abstandhalter (120, 121) besitzt, mit denen solche Blätter paketweise geschweißt werden können, und ein Bereich (119), der das Falten zum Durchblättern ermöglicht, wobei wärmegeschweißte obere und untere Versteifungsplatten (123, 124, 125) in Längsrichtung (126, 127, 128) und in Querrichtung die Aufnahmebereiche für die CDs umschreiben, die jeweils auf einer der Zentriervorrichtungen (130) einrasten, dass die Zentriervorrichtungen jeweils eine dünne Wand (131) besitzen, die an ihrer Außenseite umgehend von einer leicht konischen Einrastfläche (132) sowie eine Abfasung (133) am Ansatz besitzen mit einem Durchmesser, der ein leichtes Einrasten in das Zentralloch der CD ermöglicht, sowie Einfräsungen (134), durch die Zähne (135) elastisch verformbar gemacht werden, um das Einrasten zu erleichtern, während das Wärmeschweißen auf dem Blatt ausschließlich im dessen zentralem Teil (136) erfolgt.

16. Aufnahme nach Anspruch 15, **dadurch gekennzeichnet, dass** die Blätter (118) zum Einordnen von CDs paketweise auf deren Abstandhalter (121, 122) geschweißt sind.

17. Aufnahme nach einem der Ansprüche 15 und 16, **dadurch gekennzeichnet, dass** die Blätter (118) zum Einordnen von CDs durch Wärmeschweißung paketweise in einem Ordner (140) aus Thermoplast befestigt sind, der aus einer Grundfläche (141) mit 1,5 bis mindestens 2 mm Stärke, aus einem durch ein angeformtes Scharnier (143) fest mit der Grundfläche verbundenen Rücken (142) und aus einem durch ein zweites Scharnier (145) fest mit Rücken (142) verbundenen Deckel (144) besteht, dass er durch ein Vorderteil (146) geschlossen wird, das durch ein weiteres angeformtes Scharnier (147) fest mit der Grundfläche verbunden ist, dass ein auf der Vorderseite (146) angeklebtes Band (148) aus robustem Gewebe an seinem freien Ende ein Band (149) aus Klettverschlussmaterial besitzt, das mit einem anderen Band (150) aus Klettverschlussmaterial zusammenwirkt, indem der Deckel (144) von oben gegen das Blatt (118) gedrückt wird.
